# EUROPEAN PATENT SPECIFICATION

(11) **EP 0 461 896 B1**
(45) Date of publication and mention of the grant of the patent: **12.11.1997**
(21) Application number: 91305350.0
(22) Date of filing: 13.06.1991
(51) Int. Cl.: H04N 9/64, H04N 9/45

(54) **Digital signal processing system**
Digitales Signalverarbeitungssystem
Système de traitement de signal numérique

(30) Priority: 13.06.1990 GB 9013151
(43) Date of publication of application: 18.12.1991
(73) Proprietor: QUESTECH LIMITED, Wokingham Berkshire RG11 2PP (GB)
(72) Inventor: Tyson, Peter, Basingstoke, Hampshire RG26 6DW (GB)
(74) Representative: Bubb, Antony John Allen

(56) References cited:
- EP-A- 0 074 597
- WO-A-89/06468
- US-A- 4 404 583
- US-A- 4 463 371
- US-A- 4 636 836
- US-A- 4 797 730
- PATENT ABSTRACTS OF JAPAN vol. 13, no. 584 (E-866)22 December 1989 & JP-A-12 45 690

## Description

This invention concerns a digital signal processing system of the kind wherein an incoming analogue signal is sampled at a rate determined by a frequency component of the analogue signal and converted to a series of digital words. Such a processing system is used, for example, in converting a composite colour television signal into the corresponding digital signal required for use in digital television systems.

In the operation of such a digital signal processing system, it is necessary that the sampling frequency have a fixed phase relationship to the incoming signal in order that information represented by the phase of a component of the signal can be correctly decoded. It is also important that any phase error that should occur between the incoming signal and the sampling frequency, for example upon change of a signal source, should be corrected as rapidly as possible.

From US-A-4 797 730 and US-A-4 404 583, there are known signal processing systems according to the preamble of Claims 1 and 2. US-A-4 404 583 further describes a signal processing system according to the preamble of Claim 1. Both described systems enable a colour television signal to be sampled so that a clock oscillator can be locked to the phase of a colour burst of the television signal, but there is still a requirement for a system enabling more rapid adjustment of the phase of the clock oscillator, upon change of a signal source, as referred to above.

One object of the invention is therefore to provide means enabling rapid measurement of a phase error to be corrected and a further object is to provide means for providing a correction of the measured phase error that is able to deal more rapidly with relatively large magnitudes of error. the frequency of a signal component of the incoming signal, and a processor unit programmed to receive said output signals, to store and compare one or more sets of said amplitude signals corresponding to one or more cycles of the said signal component, and to derive from said comparison a value representing a phase error between the sampling frequency of the analogue to digital converter and the said signal component. Preferably said processor unit is further programmed to determine, by comparison of a set of sampled amplitude signals corresponding to one cycle of said signal component, that sample closest to a given zero crossing point of said cycle of said signal component, and to compute said phase error value by comparison of the amplitude of said sample with a notional value of a sample coinciding with said crossing point.

A second aspect of the invention provides a digital signal processing system comprising an analogue to digital converter arranged to receive an incoming analogue signal that is to be digitised, a variable frequency clock oscillator for controlling a sampling frequency at which said analogue to digital converter is to be operated, a phase shifter coupled between said clock oscillator and said analogue to digital converter and a processor unit arranged to receive sampled digital signal values provided by said analogue to digital converter and to provide output control signals to said variable frequency oscillator and to said phase shifter, said processor unit being programmed to compute from sampled signal values provided thereto a phase error between the said sampling frequency and a signal component of the incoming analogue signal, to provide a corresponding control signal to said phase shifter when the phase error is greater than a predetermined magnitude and to provide a corresponding control signal to said variable frequency oscillator when the phase error is below said predetermined magnitude.

These objects are achieved by the features of the characterising clauses of Claims 1 and 2 respectively.

Further preferred features and advantages of the invention will become apparent from the following description and accompanying drawings, in which
Figure 1 is a block circuit diagram of one embodiment of a digital signal processing system in accordance with the invention for use in the analogue to digital conversion of colour television signals,
Figure 2 is a more detailed circuit diagram of the phase shifter shown in Fig. 1,
Figure 3 is a flow chart illustrating the programming of the processor of Fig. 1, and
Figures 4 and 5 are diagrams illustrating a process embodied in the flow chart of Fig. 3.

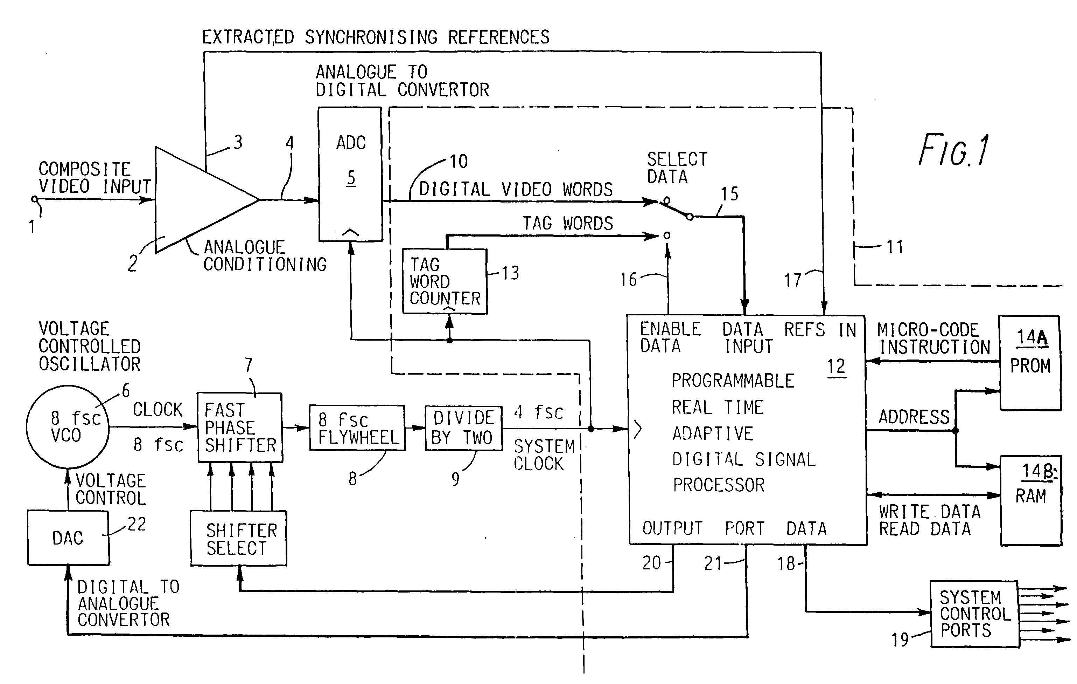

Referring to Fig. 1 of the drawings, a signal processing system in accordance with one embodiment of the invention is adapted for the analogue to digital conversion of a composite colour video signal received at a signal input 1. An analogue conditioning circuit indicated generally at 2 is arranged to set the signal voltage limits to defined levels and to extract timing information from the conventional video synchronising pulses of the composite video signal. This timing information is provided from an output indicated at 3, whereas the conditioned composite video signal is applied from an output 4 to an input of an analogue to digital converter 5. The analogue to digital converter 5 is clocked to sample the composite video signal at a repetition frequency corresponding to four times the frequency of the colour subcarrier of the composite video waveform, by means of clock pulses derived from a voltage controlled oscillator 6 and applied to the analogue to digital converter via a phase shifter 7, a flywheel circuit 8 and a divider circuit 9. At each clock pulse applied to the analogue to digital converter 5 the latter provides at an output 10 a corresponding digital word corresponding to the voltage amplitude of the incoming analogue signal.

Because the incoming analogue signal is sampled at four times the frequency of the colour subcarrier, when the phase of the clock pulses supplied to the analogue to digital converter 5 are correctly locked to the phase of the colour subcarrier of the incoming signal the voltage amplitudes of the four samples obtained during each cycle of the subcarrier represent four different relationships of sample sign or phase from which the colour information carried by the original can be decoded. Figure 5 illustrates the appropriate phase relationship between the colour subcarrier and the four samples required to be obtained during each cycle, and the locking of the sampling axes to the phase of the colour subcarrier is achieved by adjusting the frequency of the clock oscillator 6 and the phase shift provided by the phase shifter 7 with the aid of a programmed microprocessor control system as indicated within the box 11 shown in broken lines in Fig. 1.

The operation of the microprocessor system 11 will be described in more detail below, but meanwhile it will be noted that the system comprises a main processor unit 12 and a tag word counter 13, both of which receive the same clock pulses as the analogue to digital converter 5 and thus operate at a system frequency corresponding to the sampling frequency of the analogue to digital converter. The processor 12 is associated with read only memory 14A containing the control program and random access memory 14B for storing the results of processing operations. The processor 12 incorporates a data selector indicated diagrammatically at 15, which, when enabled by an appropriate signal from an output 16 of the processor 12, causes the processor 12 to read selectively digital words from the output 10 of the analogue to digital converter 5 and to read associated tag words from the tag word counter 13. The processor 12 further comprises an input 17 for receiving video synchronising signals from the output 3 of the conditioner 2, a data output 18 to control ports 19 of the processing system and control outputs 20 and 21 for the phase shifter 7 and variable frequency oscillator 6 respectively.

As will be described below, the processing system 11 is programmed to compute, from the digital signals received at 10, the synchronising signals received at 17 and the clock pulse signals received from the divider 9 a phase error between the clock pulse signals and the colour subcarrier of the incoming analogue composite video signal and to provide a corresponding error signal on one of the two outputs 20 and 21 in accordance with whether the magnitude of the error is greater or less than a predetermined value. Fast locking of the phase of the clock pulse signals to that of the composite video signal can thus be obtained in a manner that will now be described.

The variable frequency oscillator 6 comprises a stable voltage controlled oscillator which runs at eight times the nominal subcarrier frequency and generates the system clocks for feeding into the phase shifter 7. The oscillator 6 can be steered in frequency under control of the processor 12 via a digital to analogue converter 22. However changes in phase will take place over large numbers of cycles because of the limited pulling range of the oscillator and hence the primary fast control of phase lock is achieved with the phase shifter 7, which is adapted to provide fast switching of increments of phase shift via a selector 23 controlled from the output 20 of processor 12. The oscillator 6 is slowly pulled onto frequency with a second order loop filter implemented in the processor instructions as described below.

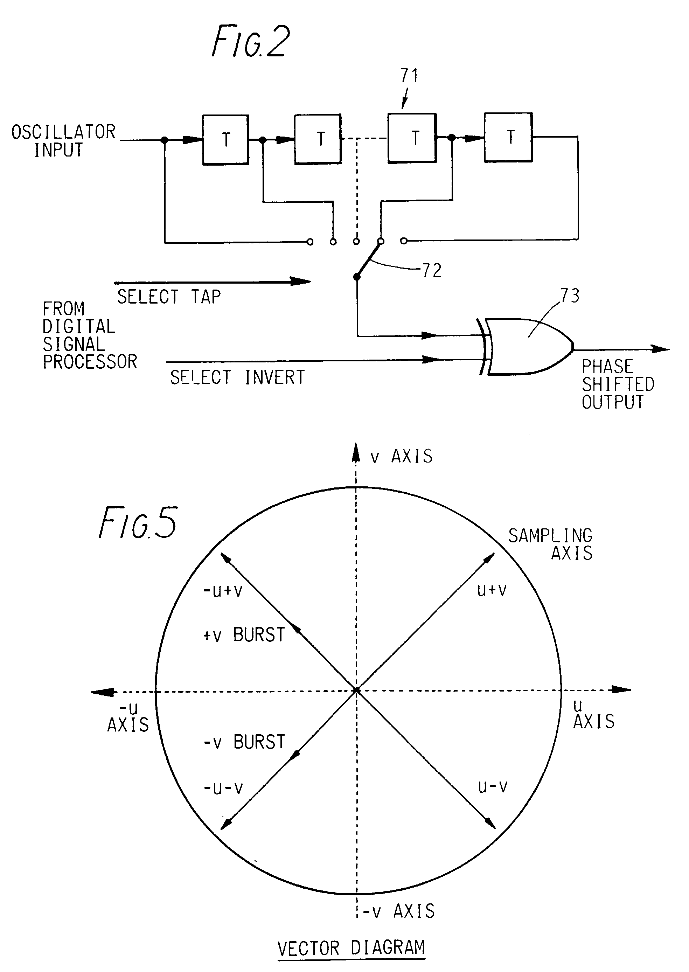

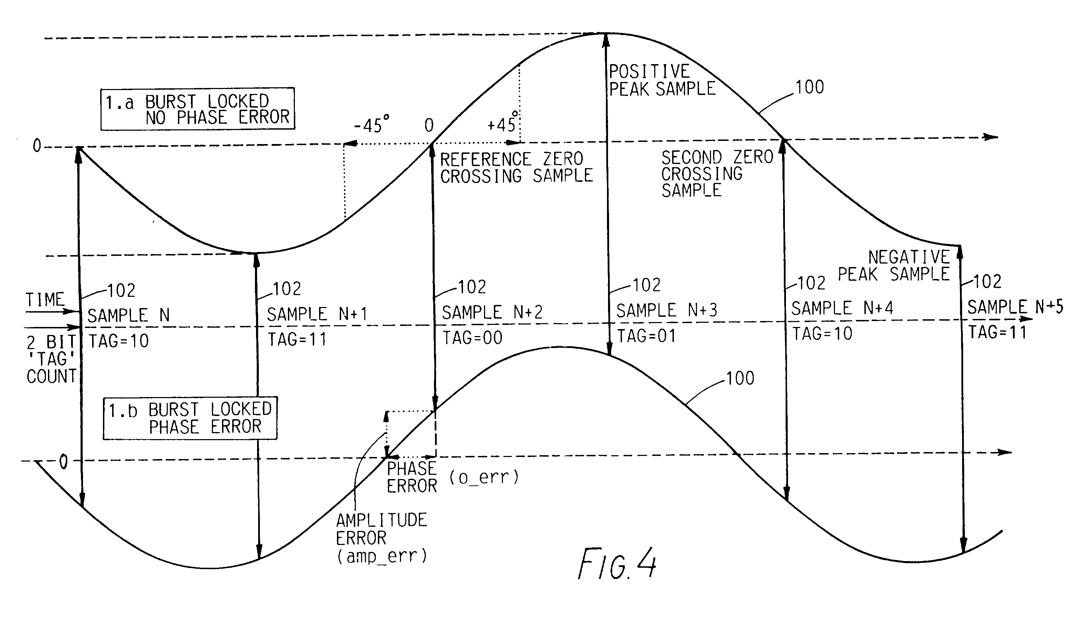

Referring to Fig. 2 the phase shifter 7 comprises a tapped delay line 71 and a programmable selector 72. Each tap off the delay line 71 is equivalent to the required resolution of phase step at subcarrier frequency, and is applied to individual inputs of the selector 72. Since the input frequency into the delay line 71 is eight times subcarrier, the delay taps move by a total of one eighth of a cycle of subcarrier frequency for a complete cycle of 360 degrees, in steps of approximately one nano-second. To reduce the total delay taps required, a programmable inverter 73 can be placed after the selected output and the total delay reduced to 180 degrees or half a cycle of the oscillator frequency. When the end tap is reached the selector 72 switches back to zero delay, and the inverter 73 is enabled, resulting in the required 180 degrees of phase shift. In operation the processor 12 applies a continuous series of steps to the programmable selector in response to a measured colour burst phase error, which has the effect of sliding the selector output along the delay line and consequently shifting the output phase. Each 360 degree movement of the oscillator phase is equivalent to 180 degrees at the system clock frequency. The system will provide the necessary rotation of a full 360 degrees at four times subcarrier by sliding the selector along the delay line up to twice per line time. An error can therefore be corrected extremely quickly using the phase shifter 7. The clock flywheel circuit 8 removes any spikes or glitches produced on the clock by the action of the processor in moving the phase shifter. The clean clocks are then divided by two in the divider 9 to produce a clean, even mark/space ratio system clock at four times nominal subcarrier frequency.

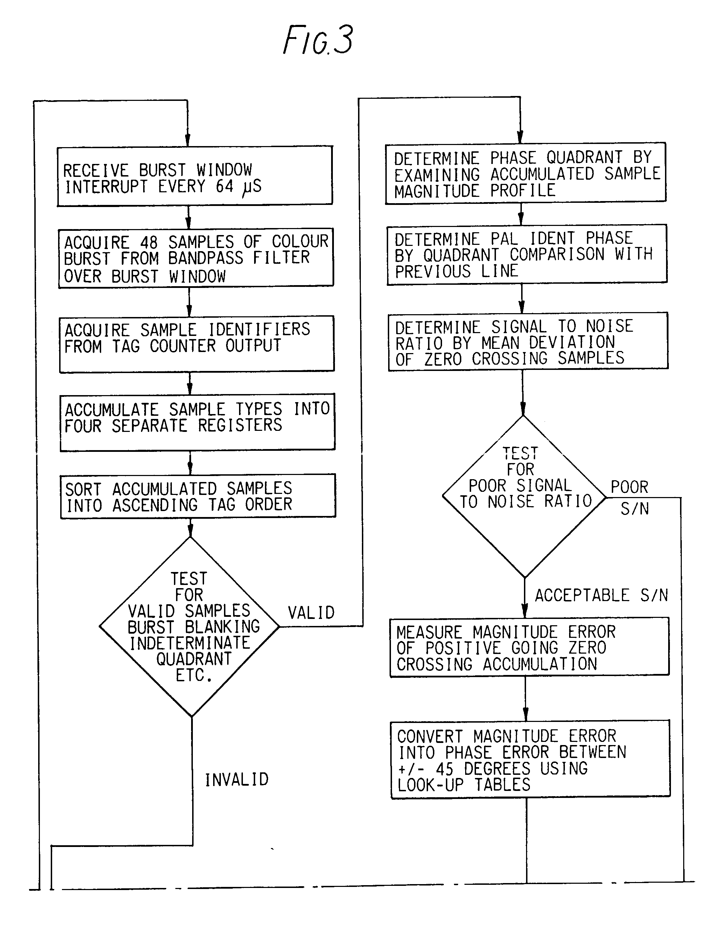

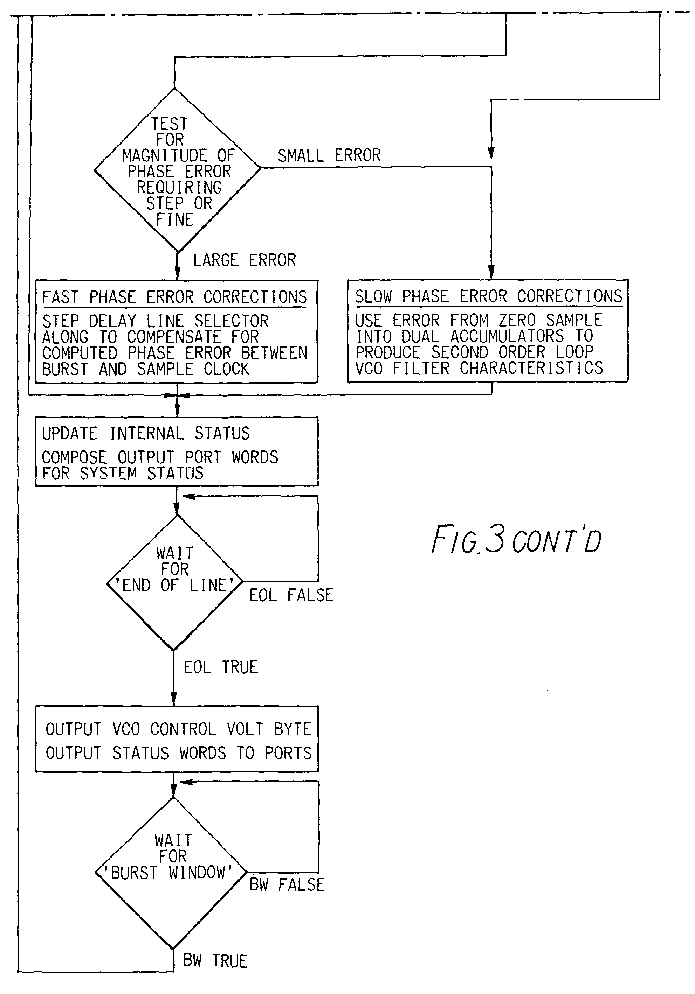

The manner in which the processing system 11 of Fig. 1 computes the phase error from incoming signals will now be described in more detail with reference to Figs. 3 to 5. As already mentioned above, Fig. 5 is a vector diagram showing the correct, in-phase relationship between the sampling axes as defined by the system clock pulses, and the axes of the conventional chrominance signal components of the colour subcarrier of the composite video signal. The upper part of Fig. 4 shows the corresponding in-phase relationship between the waveform of the conventional colour burst signal of the composite waveform indicated at 100, and the digital values, indicated at 102, obtained by sampling the colour burst of the composite video signal, when the system clock pulses are correctly phase locked with no phase error. The lower part of Fig. 4 shows, for comparison, the corresponding relationship when a phase error of less than 45° occurs between the colour burst waveform and the clock pulses. Provided that the amplitude of the colour burst waveform is known, it will be seen that the phase error can be determined from the corresponding amplitude error that will occur in the digital value of that sample which is closest to a zero crossing point of the colour burst waveform. The phase error will thus be the arc-sine of the amplitude error represented by the difference between the sampled digital value and the digital value that would correspond to a zero crossing point of the waveform.

Fig. 3 is a flow chart illustrating the programming of the processor system 11 required to affect the above-mentioned computation and provide a corresponding control signal to the oscillator 6 or phase shifter 7 of Fig. 1. The individual steps of the flow chart will be understood by one skilled in the art without further detailed explanation, and therefore the relationship between the flow chart and the foregoing description will be summarised only briefly.

The program commences with the wait for 'burst window', the presence of a burst window within which the colour burst of the composite video signal will occur being determined from the conventional synchronising signals received at input 17 of the processor 12. When the presence of a burst window is established, the sampled digital values from the analogue to digital converter 5 are received via a digital subcarrier band-pass filter, not shown in Fig. 1, and the data selector 15 and stored in the random access memory 14 to provide, for each of the ten cycles of the colour burst, four sampled digital values corresponding to the samples 102 of Fig. 4. The processor 12 then also receives from the tag word counter 13 corresponding tag words that are associated with each of the sampled and stored digital values, so that corresponding samples from each of the cycles of the colour burst signal are each identified by the same tag word to identify the relative positions of the samples within the cycle. This relationship between samples and tag words is illustrated in Fig. 4. Each set of samples identified by the same tag word is then accumulated in an individual register to provide an integrated value for the entire period of the colour burst signal. This averaging will provide immunity to burst envelope distortion and noise. The four accumulated samples are then processed to determine the phase error from the amplitude error of that sample identified as being closest to the positive going zero crossing point of the colour burst waveform. Selection of the appropriate sample type will ensure that the phase error is within plus or minus 45° and a corresponding adjustment of the phase shifter 7 or the oscillator 6 can then be initiated in accordance with the determined magnitude of the phase error.

The above described measurement and correction loop enables the system to acquire the phase, and where appropriate the PAL ident, of the incoming colour burst within three line times and provides extremely quick recovery from non-synchronous changes in the incoming signal to bring the clocks back into a known phase. As can be seen by reference to the flow chart of Fig. 3 the use of digital techniques in the system also conveys other advantages to enhance performance over conventional analogue locking methods, by directly measuring the amount of noise present during the colour burst, and indicating the colour burst amplitude. These measurements may then be used to modify characteristics within the system such as alteration of loop filtering for noisy signals, and automatic corrections for low amplitude incoming subcarrier by simple condition testing in the processor program. All the functions provided by a conventional analogue phase locked oscillator, such as the loop filtering and PAL ident extraction are implemented in the program and are therefore capable of being dynamically altered by the processor to optimise locking conditions.

## Claims

1. A digital signal processing system, comprising an analogue to digital converter (5) arranged to receive an incoming analogue signal to be digitised and to provide digital output signals representing the amplitude of the incoming analogue signal sampled at a frequency corresponding to a multiple of the frequency of a signal component of the incoming signal, means (12,14) for receiving and storing more than two of said output signals for each of a plurality of cycles of the said signal component, and means for comparing the values of said stored signals to derive a value representing a phase error between the sampling frequency of the analogue to digital converter and the said signal component, characterised in that said comparing means comprises a processor unit (12) programmed to select by comparison of sets of said stored signals corresponding to a plurality of cycles of said signal component, that set of signals that was sampled at a point closest to a given zero crossing point of each of said cycles of said signal component, and to compute said phase error value by comparison of the amplitude of said selected signal set with a notional value of a sample coinciding with said crossing point.

2. A digital signal processing system comprising an analogue to digital converter (5) arranged to receive an incoming analogue signal that is to be digitised, a variable frequency clock oscillator (6) for controlling a sampling frequency at which said analogue to digital converter (5) is to be operated, a phase shifter (7) coupled between said clock oscillator and said analogue to digital converter (5), and means (12) arranged to receive sampled digital signal values provided by said analogue to digital converter (5), to compare said sampled values and to provide output control signals to said phase shifter for adjusting the phase relationship of said sampling frequency and the incoming analogue signal, characterised in that said comparing means comprises a processor unit (12) programmed to compute from sampled signal values provided thereto a phase error between the said sampling frequency and a signal component of the incoming analogue signal, to provide a control signal to said phase shifter (7) when the phase error is greater than a predetermined magnitude and to provide a control signal to said variable frequency oscillator (6) when the phase error is below said predetermined magnitude.

3. A signal processing system according to claims 1 or 2 for use in digitising colour television signals, characterised in that the sampling frequency of the analogue to digital converter (5) is four times the frequency of the colour subcarrier of the composite video waveform, and that the signal component of the incoming analogue signal with reference to which the phase error is computed is the colour burst of the composite video waveform.

4. A system as claimed in claim 2 or claim 3 as appended thereto, characterised in that the said phase shifter (7) comprises a tapped delay line (71) and that the control signal provided to the phase shifter (7) from the processor unit (12) controls the selection of that tap of the delay line from which the oscillator signal is supplied to the analogue to digital converter (5).

5. A signal processing system as claimed in claim 3 or claim 4 as appended thereto, characterised in that the processor unit (12) is programmed to receive and store sampled signal values received during each cycle of a colour burst, in such a manner that the respective values corresponding to a single cycle of the colour burst are averaged over a plurality of cycles before the phase error is computed.

6. A signal processing system according to claim 2 or any one of claims 3-5 as appended thereto, characterised in that said processor unit (12) is further programmed to determine, by comparison of a set of sampled amplitude signals corresponding to one cycle of said signal component, that sample closest to a given zero crossing point of said cycle of said signal component, and to compute said phase error value by comparison of the amplitude of said sample with a notional value of a sample coinciding with said crossing point.

7. A signal processing system as claimed in claim 3, or any one of claims 4-6 as appended thereto, characterised in that the processor unit (12) and a tag word counter (13) are both arranged to be controlled at a system frequency corresponding to the sampling frequency of the analogue to digital converter (5), and that the processor unit (12) is arranged to receive from the tag word counter (13) tag words associated with each of the samples received from the analogue to digital converter (5) during a cycle of the colour burst signal, in order to identify the relative positions of the samples within said cycle.

8. A signal processing system according to claim 7, as appended to claim 5, characterised in that averaging of said respective values is effected by said processor unit (12) accumulating consecutive samples identified by the same tag word in a corresponding register to provide an integrated value.

9. A signal processing system according to claim 3 or any one of claims 4-8 as appended thereto, characterised in that it further comprises means (3) for extracting synchronising reference signals from the composite video waveform of the analogue signal and for providing said reference signals to said processor unit (12) to define a colour burst window during which samples may be accepted from the analogue to digital converter (5).

## Patentansprüche

1. Digitales Signalverarbeitungssystem mit einem Analog/Digital-Wandler (5) zur Aufnahme eines zu digitalisierenden ankommenden Analogsignals und zum Anliefern von digitalen Ausgangssignalen, welche die mit einer Frequenz entsprechend einem Vielfachen der Frequenz einer Signalkomponente des ankommenden Signals abgefragte Amplitude des ankommenden Analogsignals darstellen, einer Anordnung (12, 14) zum Aufnehmen und Speichern von mehr als zwei der Ausgangssignale für jeden einer Mehrzahl von Zyklen der Signalkomponente, und einer Anordnung zum Vergleichen der Werte der gespeicherten Signale zum Ableiten eines Wertes, der einen Phasenfehler zwischen der Abfragefrequenz des Analog/Digital-Wandlers und der Signalkomponente repräsentiert, **dadurch gekennzeichnet**, daß die Vergleicheranordnung eine Prozessoreinheit (12) aufweist, die so programmiert ist, daß durch Vergleich von Sätzen der gespeicherten Signale, die einer Mehrzahl von Zyklen der Signalkomponente entsprechen, derjenige Satz von Signalen ausgewählt wird, der an einer Stelle abgefragt wurde, dic einer gegebenen Nulldurchgarigssstelle jeder der Zyklen der Signalkomponente am nächsten liegt, und daß der Phasenfehlerwert durch Vergleich der Amplitude des gewählten Signalsatzes mit einem Fiktivwert einer mit der Nulldurchgangsstelle zusammenfallenden Abfrage errechnet wird.

2. Digitales Signalverarbeitungssystem mit einem Analog/Digital-Wandler (5) zur Aufnahme eines zu digitalisierenden ankommenden Analogsignals, einem Taktoszillator (6) mit variabler Frequenz zum Steuern einer Abfragefrequenz, mit welcher der Analog/ Digital-Wandler (5) betrieben werden soll, einem zwischen den Taktoszillator und den Analog/Digital-Wandler (5) gekoppelten Phasenschieber (7), und einer Anordnung (12) zum Aufnehmen von von dem Analog/Digital-Wandler (5) angelieferten abgefragten Digitalsignalwerten zum Vergleichen dieser abgefragten Werte und zum Anliefern von Ausgangssteuersignalen an den Phasenschieber zum Einstellen der Phasenbeziehung der Abfragefrequenz und des ankommenden Analogsignals, dadurch gekennzeichnet, daß die Vergleicheranordnung eine Prozessoreinheit (12) aufweist, die so programmiert ist, daß sie aus ihr zugeführten abgefragten Signalwerten einen Phasenfehler zwischen der Abfragefrequenz und einer Signalkomponente des ankommenden Analogsignals errechnet, um dem Phasenschieber (7) ein Steuersignal zuzuführen, wenn der Phasenfehler größer als ein vorbestimmter Wert ist, und um dem eine variable Frequenz bereitstellenden Oszillator (6) ein Steuersignal zuzuführen, wenn der Phasenfehler unter dem vorbestimmten Wert liegt.

3. Signalverarbeitungssystem nach Ansprüchen 1 oder 2 zur Verwendung beim Digitalisieren von Farbfernsehsignalen, dadurch gekennzeichnet, daß die Abfragefrequenz des Analog/Digital-Wandlers (5) das Vierfache der Frequenz des Farbhilfsträgers des zusammengesetzten Videosignals beträgt, und daß die Signalkomponente des ankommenden Analogsignals, mit Bezug auf welche der Phasenfehler errechnet wird, das Farbsynchronsignal des zusammengesetzten Videosignals ist.

4. System nach Anspruch 2 oder dem davon abhängig gemachten Anspruch 3, dadurch gekennzeichnet, daß der Phasenschieber (7) eine angezapfte Verzögerungsleitung (71) aufweist, und daß das dem Phasenschieber (7) von der Prozessoreinheit (12) zugeführte Steuersignal die Auswahl derjenigen Anzapfung der Verzögerungsleitung steuert, von welcher das Oszillatorsignal dem Analog/Digital-Wandler (5) zugeführt wird.

5. Signalverarbeitungssystem nach Anspruch 3 oder dem davon abhängig gemachten Anspruch 4, dadurch gekennzeichnet, daß die Prozessoreinheit (12) so programmiert ist, daß sie während jedes Zyklus des Farbsynchronsignals abgefragte Signalwerte derart aufnimmt und speichert, daß die einem einzelnen Zyklus des Farbsynchronsignals entsprechenden Werte über eine Mehrzahl von Zyklen gemittelt werden, bevor der Phasenfehler errechnet wird.

6. Signalverarbeitungssystem nach Anspruch 2 oder nach einem der davon abhängig gemachten Ansprüche 3 bis 5, dadurch gekennzeichnet, daß die Prozessoreinheit (12) des weiteren programmiert ist, um aufgrund eines Vergleichs einer Gruppe von abgefragten Amplitudensignalen entsprechend einem Zyklus der Signalkomponente diejenige Abfrage zu bestimmen, die einer gegebenen Nulldurchgangsstelle des Zyklus der Signalkomponente am nächsten liegt, und um den Phasenfehlerwert durch Vergleich der Amplitude dieser Abfrage mit einem Fiktivwert einer mit der Nulldurchgangsstelle zusammenfallenden Abfrage zu errechnen.

7. Signalverarbeitungssystem nach Anspruch 3 oder einem der davon abhängig gemachten Ansprüche 4 bis 6, dadurch gekennzeichnet, daß die Prozessoreinheit (12) und ein Tagword-Zähler (13) beide so angeordnet sind, daß sie mit einer der Abfragefrequenz des Analog/Digital-Wandlers (5) entsprechenden Systemfrequenz gesteuert werden, und daß die Prozessoreinheit (12) von dem Tagword-Zähler (13) Tagwords aufnimmt, die jeder der von dem Analog/Digital-Wandler (5) während eines Zyklus des Farbsynchronsignals aufgenommenen Abfragen zugeordnet sind, um die Relativpositionen der Abfragen innerhalb des Zyklus zu identifizieren.

8. Signalverarbeitungssystem nach Anspruch 7 in Abhängigkeit von Anspruch 5, dadurch gekennzeichnet, daß das Mitteln der betreffenden Werte dadurch erfolgt, daß die Prozessoreinheit (12) aufeinanderfolgende, mittels des gleichen Tagwords identifizierte Abfragen in einem entsprechenden Register akkumuliert, um einen integrierten Wert bereitzustellen.

9. Signalverarbeitungssystem nach Anspruch 3 oder einem der davon abhängig gemachten Ansprüche 4 bis 8, dadurch gekennzeichnet, daß es ferner eine Anordnung (3) zum Extrahieren von Synchronisier-Bezugssignalen aus dem zusammengesetzten Videosignal des Analogsignals und zum Zuführen dieser Bezugssignale zu der Prozessoreinheit (12) aufweist, um ein Farbsynchronsignal-Fenster zu definieren, während dessen Abfragen von dem Analog/Digital-Wandler (5) akzeptiert werden können.

## Revendications

1. Un système de traitement de signal numérique, comprenant un convertisseur analogique numérique (5) conçu pour recevoir un signal analogique entrant à numériser et pour fournir des signaux numériques de sortie représentant l'amplitude du signal analogique entrant échantillonné à une fréquence correspondant à un multiple de la fréquence d'une composante du signal entrant, des moyens (12,14) pour recevoir et stocker plus de deux desdits signaux de sortie pour chacun des multiples cycles de ladite composante de signal, et des moyens pour comparer les valeurs desdits signaux stockés afin de déduire une valeur représentant une erreur de phase entre la fréquence d'échantillonnage du convertisseur numérique et ladite composante de signal, caractérisé en ce que lesdits moyens de comparaison comprennent une unité de traitement (12) programmée pour sélectionner par comparaison de jeux desdits signaux stockés correspondant à une pluralité de cycles de ladite composante de signal, le jeu de signaux qui a été échantillonné au point le plus proche d'un point de passage par zéro donné de chacun desdits cycles de ladite composante de signal, et pour calculer ladite valeur d'erreur de phase par comparaison de l'amplitude dudit jeu de signaux sélectionné avec une valeur fictive d'un échantillon coïncidant avec ledit point de passage.

2. Un système de traitement de signal numérique comprenant un convertisseur analogique numérique (5) conçu pour recevoir un signal analogique entrant à numériser, un générateur d'impulsions d'horloge à fréquence variable (6) pour commander une fréquence d'échantillonnage à laquelle ledit convertisseur analogique numérique (5) doit opérer, un déphaseur (7) couplé entre ledit générateur d'impulsions d'horloge et ledit convertisseur analogique numérique (5), et des moyens (12) conçus pour recevoir des valeurs échantillonnées de signal numérique fournies par ledit convertisseur analogique numérique (5), pour comparer lesdites valeurs échantillonnées et produire des signaux de commande de sortie audit déphaseur afin d'ajuster la relation de phase de ladite fréquence d'échantillonnage et le signal analogique entrant, caractérisé en ce que les moyens de comparaison comprennent une unité de traitement (12) programmée pour calculer à partir des valeurs échantillonnées de signal qui lui sont fournies une erreur de phase entre ladite fréquence d'échantillonnage et une composante du signal analogique entrant, pour fournir un signal de commande audit déphaseur (7) lorsque l'erreur de phase est supérieure à une amplitude prédéterminée et pour fournir un signal de commande audit oscillateur à fréquence variable (6) lorsque l'erreur de phase est inférieure à ladite amplitude prédéterminée.

3. Un système de traitement de signal selon les revendications 1 ou 2 destiné à être utilisé dans la numérisation des signaux de télévision en couleurs, caractérisé en ce que la fréquence d'échantillonnage du convertisseur analogique numérique (5) est égale à quatre fois la fréquence de la sous-porteuse de la forme d'onde du signal vidéo composite, et en ce que la composante du signal analogique entrant à partir de laquelle l'erreur de phase est calculée est le signal couleur de la forme d'onde du signal vidéo composite.

4. Un système tel qu'il est revendiqué dans la revendication 2 ou la revendication 3 telle qu'elle est annexée à celle-ci, caractérisé en ce que ledit déphaseur (7) comprend une ligne à retard à prises (71) et en ce que le signal de commande fourni au déphaseur (7) à partir de l'unité de traitement (12) commande la sélection de la prise de la ligne à retard à partir de laquelle le signal d'oscillateur est fourni au convertisseur analogique numérique (5).

5. Un système de traitement de signal tel qu'il est revendiqué dans la revendication 3 ou la revendication 4 telle qu'elle est annexée à celle-ci, caractérisé en ce que l'unité de traitement (12) est programmée pour recevoir et stocker des valeurs de signal échantillonnées reçues pendant chaque cycle d'un signal couleur, de telle manière qu'une valeur moyenne soit établie à partir des valeurs respectives correspondant à un cycle unique du signal couleur sur une pluralité de cycles avant de calculer l'erreur de phase.

6. Un système de traitement de signal selon la revendication 2 ou l'une ou l'autre des revendications 3 à 5 telles qu'elles sont annexées à celle-ci, caractérisé en ce que ladite unité de traitement (12) est en outre programmée pour déterminer, par comparaison d'un jeu de signaux d'amplitude échantillonnés correspondant à un cycle de ladite composante de signal, l'échantillon le plus proche d'un point de passage par zéro donné dudit cycle de ladite composante de signal, et pour calculer ladite valeur d'erreur de phase par comparaison de l'amplitude dudit échantillon avec une valeur fictive d'un échantillon coïncidant avec ledit point de passage.

7. Un système de traitement de signal tel qu'il est revendiqué dans la revendication 3, ou dans l'une ou l'autre des revendications 4 à 6 telles qu'elles sont annexées à celle-ci, caractérisé en ce que l'unité de traitement (12) et un compteur de mots d'identification (13) sont tous deux conçus pour être commandés à une fréquence système correspondant à la fréquence d'échantillonnage du convertisseur analogique numérique (5), et en ce que l'unité de traitement (12) est prévue pour recevoir du compteur de mots d'identification (13) des mots d'identification associés à chacun des échantillons reçus du convertisseur numérique (5) pendant un cycle du signal couleur, afin d'identifier les positions relatives des échantillons à l'intérieur dudit cycle.

8. Un système de traitement de signal selon la revendication 7, telle qu'elle est annexée à la revendication 5, caractérisé en ce que le moyennage desdites valeurs respectives est effectué par ladite unité de traitement (12) en cumulant les échantillons consécutifs identifiés par le même mot d'identification dans un registre correspondant pour fournir une valeur d'intégration.

9. Un système de traitement de signal selon la revendication 3 ou l'une ou l'autre des revendications 4 à 8 telles qu'elles sont annexées à celle-ci, caractérisé en ce qu'il comprend en outre des moyens (3) pour extraire les signaux de référence de synchronisation de la forme d'onde du signal vidéo composite du signal analogique et pour fournir lesdits signaux de référence à ladite unité de traitement (12) afin de définir une fenêtre de signal couleur pendant laquelle des échantillons émanant du convertisseur analogique numérique (5) peuvent être acceptés.
